# FASCICULE DE BREVET EUROPEEN

(11) **EP 3 568 956 B1**
(45) Date de publication et mention de la délivrance du brevet: **10.03.2021**
(21) Numéro de dépôt: 18702744.6
(22) Date de dépôt: 11.01.2018
(51) Int. Cl.: H04L 12/28, H04N 21/418, H04N 21/4227

(54) **PÉRIPHÉRIQUE USB CONNECTÉ VIA WIFI**
ÜBER WIFI VERBUNDENES USB-PERIPHERIEGERÄT
USB PERIPHERAL CONNECTED VIA WIFI

(30) Priorité: 12.01.2017 FR 1750283
(43) Date de publication de la demande: 20.11.2019
(73) Titulaire: Bull SAS, 78340 Les Clayes-sous-Bois (FR)
(72) Inventeur: AIELLO, Damien, 78340 Les Clayes sous Bois (FR); RADANLIEV, Martin, 78340 Les Clayes sous Bois (FR); DE LASTELLE DU PRE, Renaud, 78340 Les Clayes sous Bois (FR)
(74) Mandataire: Novagraaf Technologies
(86) Numéro de dépôt international: PCT/FR2018/000006
(87) Numéro de publication internationale: WO 2018/130763

(56) Documents cités:
- WO-A2-2010/095040
- US-A1- 2010 250 761
- US-A1- 2014 156 791

## Description

L'invention a trait à la diffusion de contenu média sur un appareil dépourvu d'interface de communication sans fil. Elle concerne également un périphérique de stockage amovible pourvu d'un connecteur au standard Bus série universel (USB) permettant de réaliser la diffusion de contenu média sur un appareil dépourvu d'interface de communication sans fil grâce à une connectivité intégrée et un programme adéquat.

Il existe encore sur le marché de nombreux appareils pourvus de moyens de lecture média (c'est-à-dire audio et/ou vidéo) mais dépourvus d'interface de communication sans fil (par ex. de type WLAN, typiquement selon les protocoles de communication IEEE 802.15 « Bluetooth » ou IEEE 802.11 « Wifi »). Citons à titre d'exemple certaines chaînes haute-fidélité, certains postes de radio, certains postes de télévision, certains lecteurs optiques (DVD, Blu-Ray), ou encore de nombreux vidéoprojecteurs.

Cependant, la plupart de ces appareils sont équipés :
- de ports série, et plus précisément de ports au standard Bus série universel (Universal Serial Bus ou USB), car ces ports, relativement anciens, permettent de réaliser de nombreuses connexions, et en particulier des connexions vers des périphériques de stockage amovibles de type clé USB ;
- de processeurs sur lesquels sont implémentés des lecteurs média pourvus de codeurs-décodeurs (Codées) appropriés qui permettent d'assurer la diffusion d'éventuels contenus médias stockés sur les périphériques de stockage précités.

C'est ainsi que de nombreux lecteurs optiques sont capables de lire des contenus médias stockés sur clé USB (sous réserve de compatibilité de format) ; ainsi, la plupart des lecteurs optiques DVD ou Blu-Ray sont capables de lire les fichiers au format MPEG-4 (plus connu sous la dénomination DivX).

Cela suppose néanmoins que les contenus aient été préalablement mémorisés sur le support de stockage. La capacité mémoire des supports de stockage modernes a, certes, augmenté, mais elle demeure néanmoins limitée, surtout en comparaison de la capacité de stockage des serveurs délocalisés, accessibles par opérateur via des services de cloud computing (également appelés services d'informatique en nuage).

Or les services de cloud computing ne sont pas directement accessibles depuis les appareils dépourvus d'une interface de communication appropriée, et notamment d'interface de communication sans fil.

Il a été proposé (cf. la demande de brevet américain US 2014/0156791, Omnifone Ltd) un applicatif dénommé « Cloudstick » implémenté sur une clé USB équipée d'une interface réseau, qui permet d'établir, via l'interface réseau, une connexion avec un catalogue numérique distant et de télécharger des contenus médias pour en permettre la lecture par un appareil dépourvu d'interface de communication.

Cette solution est intéressante en apparence, mais elle ne va pourtant pas sans inconvénient. En effet, compte tenu des temps de connexion et de téléchargement des contenus, la lecture de ceux-ci sur l'appareil est loin d'être immédiate, au détriment de l'ergonomie et, plus généralement de la qualité perçue de cette technologie.

Le besoin persiste donc de proposer une solution permettant la lecture de contenus média sur des appareils dépourvus de connectivité (et notamment d'interface de communication sans fil), sans altérer la qualité de la diffusion. Plus précisément, un objectif est de permettre la diffusion de contenu sur des appareils dépourvus d'interface de communication sans fil avec la même fluidité apparente qu'une lecture directe réalisée à partir d'un support mémoire local.

A cet effet, il est proposé un périphérique de stockage amovible comprenant :
- un processeur,
- une mémoire à semi-conducteurs non volatile réinscriptible (flash) reliée au processeur,
- un connecteur au standard Bus série universel (USB), relié au processeur,
- une interface de communication sans fil reliée au processeur, lequel est programmé pour :
   - détecter la lecture, par un appareil dépourvu d'interface de communication sans fil, d'un contenu média incomplet stocké sur la mémoire,
   - établir, via l'interface de communication sans fil, une connexion avec une passerelle distante ;
   - télécharger un contenu média du contenu média incomplet complémentaire via la passerelle,
   - inscrire en mémoire le contenu complémentaire ainsi téléchargé.

Selon un mode de réalisation, le processeur est programmé pour commander:
- la lecture du contenu média incomplet,
- la lecture du contenu média complémentaire dans la continuité du contenu média incomplet.

Le processeur peut en outre être programmé pour :
- détecter, lors de la lecture du contenu média incomplet, l'approche de la fin de cette lecture,
- commander la concaténation du contenu média incomplet et du contenu média complémentaire,
- poursuivre la lecture sur l'appareil du contenu média complet.

Il est proposé, en deuxième lieu, un procédé de diffusion de contenu média sur un appareil dépourvu d'interface de communication sans fil, ce procédé comprenant les opérations consistant à :
- fournir un périphérique de stockage tel que décrit ci-dessus ;
- détecter le branchement du connecteur USB du périphérique sur un port complémentaire équipant l'appareil ;
- détecter la lecture par l'appareil d'un contenu média incomplet stocké sur la mémoire du périphérique de stockage ;
- établir, via l'interface de communication sans fil, une connexion entre le processeur et une passerelle distante ;
- télécharger un contenu média complémentaire du contenu média incomplet via la passerelle ;
- inscrire en mémoire le contenu complémentaire ainsi téléchargé.

Il peut être en outre prévu une opération de lecture du contenu média complémentaire sur l'appareil dans la continuité du contenu média incomplet.

Une opération de concaténation du contenu média incomplet et du contenu média complémentaire peut également être prévue.

D'autres objets et avantages de l'invention apparaîtront à la lumière de la description d'un mode de réalisation, faite ci-après en référence aux dessins annexés dans lesquels :
- la **FIG.1** est une vue en perspective montrant un appareil de diffusion de contenu média auquel est connecté un périphérique de stockage amovible relié par une liaison sans fil à une passerelle ;
- la **FIG.2** est une vue schématique montrant l'architecture interne du périphérique de stockage ;
- la **FIG.3** est un diagramme fonctionnel illustrant un procédé de diffusion de contenu média sur un appareil tel qu'illustré sur la **FIG.1****.**

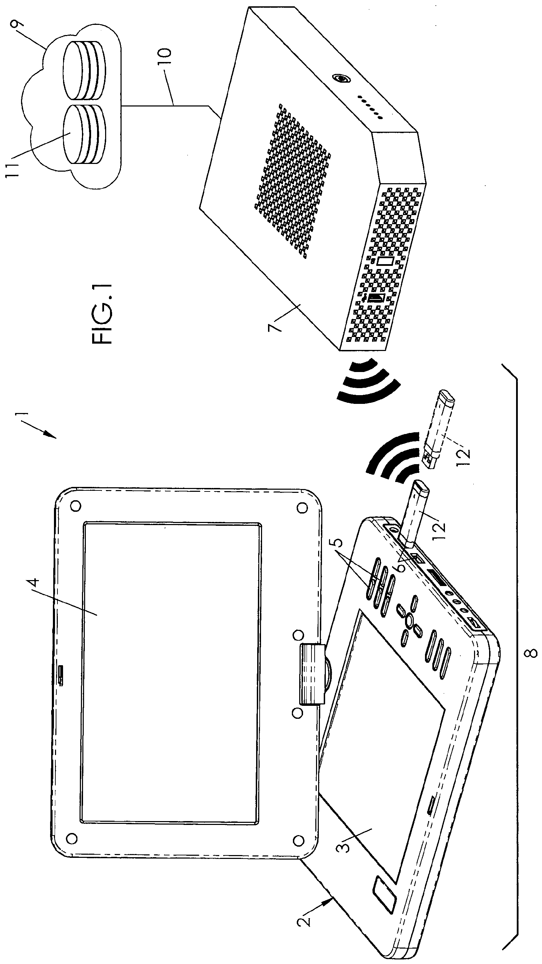

Sur la **FIG.1** est représenté un exemple de réseau **1** agencé pour permettre la diffusion de contenu média sur un appareil **2** muni de moyens de lecture d'un tel contenu mais dépourvu d'interface de communication sans fil.

Dans ce qui suit, on fait fréquemment référence à des standards ou à des normes désignées par leurs dénominations courantes, qui peuvent être des marques déposées. Ce n'est que par commodité et non par violation des droits que la mention « marque déposée » n'est pas associée aux dénominations concernées.

De nombreux appareils de lecture de contenu média sont encore dépourvus d'interface de communication sans fil : postes de radio, chaînes haute-fidélité, postes de télévision, lecteurs optiques (DVD, Blu-Ray).

Dans l'exemple illustré sur la **FIG.1****,** l'appareil **2** est un lecteur optique, pourvu (le cas échéant) d'un chargeur **3,** d'un écran **4** (ici pivotant), de boutons **5** de commande et de ports, parmi lesquels au moins un port **6** série de type Bus série universel (Universal Serial Bus ou USB), selon l'un des standards édictés par le consortium USB Implementers Forum, avantageusement selon un standard égal ou postérieur à USB 2.0 (notamment USB 2.0, USB 3.0 ou encore USB 3.1).

Comme on le voit sur la **FIG.1****,** le réseau **1** inclut une passerelle **7** (de l'anglais gateway ou GW) qui assure l'interface de routage entre un réseau **8** local (Local Area Network ou LAN) et un réseau **9** élargi (Wide Area Network ou WAN) tel que l'Internet. Selon un mode particulier de réalisation, la passerelle **7** peut être de type « box », c'est-à-dire qu'outre la fonction de routage, de modulation et de démodulation (modem), la passerelle **7** permet l'accès à des services supplémentaires, tel que la téléphonie sur IP (protocole internet) et la télévision sur IP, dans le cadre d'une offre de services couramment dénommée Triple Play.

La connexion au réseau **9** élargi peut, de manière classique, et comme schématiquement illustré, être assurée via une connexion **10** filaire de type Ethernet et/ou fibre optique, par exemple par l'intermédiaire d'un convertisseur Ethernet-fibre optique (non représenté), auquel la passerelle **7** est connectée par câble Ethernet et qui est elle-même reliée au réseau **9** élargi par fibre optique.

De la sorte, la passerelle **7** peut accéder à des services média, c'est-à-dire se connecter à des serveurs distants pourvus de bases **11** de données (schématiquement représentées sur la **FIG.1****)** sur lesquelles sont stockés des contenus média (audio et/ou vidéo) susceptibles d'être téléchargés par ou via la passerelle **7** et diffusés au sein du réseau **8** local.

Pour la communication avec les équipements de ce réseau local, la passerelle **7** est pourvue d'une interface de communications sans fil conforme à un standard connu (par ex. Bluetooth ou Wifi).

L'appareil **2** étant dépourvu d'interface de communication sans fil, il n'est pas capable de se connecter à la passerelle **7.** A fortiori, en l'absence d'équipement ad hoc, l'appareil **2** n'est pas capable d'assurer le téléchargement la diffusion des contenus média mémorisés sur les bases **11** de données.

Cette fonction est remplie par un périphérique **12** de stockage amovible, comprenant :
- un processeur **13,**
- une mémoire **14** flash, c'est-à-dire une mémoire à semi-conducteurs, non volatile et réinscriptible reliée au processeur **13,**
- un connecteur **15** USB relié au processeur **13,**
- une interface **16** de communication sans fil reliée au processeur **13.**

Le connecteur **15** USB comprend, de manière classique, plusieurs broches. Dans le cas de l'USB **2.0,** le connecteur **15,** de type A, comprend une typiquement :
- une broche d'alimentation (généralement en 5V), qui assure l'alimentation électrique du processeur à partir d'une source de puissance équipant l'appareil **2,**
- deux broches, dénommées respectivement D- et D+ et servant au transfert des données binaires de manière bilatérale entre le processeur **13** et une unité de calcul équipant l'appareil **2,** selon une norme d'encodage NRZI (Non Return to Zéro Inverted), et
- une borne de liaison à la masse.

Le processeur **13** est programmé pour échanger avec l'appareil **2** des données selon la norme d'encodage précitée, et pour assurer la lecture et l'écriture de données sur la mémoire **14** flash.

L'interface **16** de communication sans fil (notamment Bluetooth ou Wifi) se présente sous forme d'un composant incluant une (ou plusieurs) antenne(s) et un émetteur récepteur programmé pour assurer la conversion des données issues du processeur **13** suivant un protocole de communication sans fil (802.11 de l'IEEE dans le cas de la norme Wifi) et inversement.

Selon un mode de réalisation, le périphérique **12** inclut en outre un composant **17** supplémentaire intégrant un circuit de puissance de type diviseur de tension relié aux broches d'alimentation et de masse du connecteur **15** pour alimenter le processeur **13** suivant un signal à la tension requise par celui-ci (généralement 5V, 3,3V ou 2,5V en continu).

Selon un mode particulier de réalisation, le processeur **13,** la mémoire **14** flash et l'interface **16** de communication sans fil (ainsi que, le cas échéant, le composant **17** de puissance) sont montés sur une même carte **18** support, solidaire du connecteur **15** et partiellement encapsulée dans un boîtier **19** dont le connecteur **15** fait saillie. Le périphérique **12** de stockage se présente ainsi extérieurement sous forme d'une clé USB.

Sur la mémoire **14** est stocké au moins un contenu média incomplet, par ex. sous forme d'un fichier audio et /ou vidéo. Ce fichier peut être enregistré sous un format classique, par ex. MPEG-4, compatible avec le système d'exploitation de l'appareil **2.** Le contenu est dit « incomplet » dans la mesure où il s'agit d'une partie d'un contenu de taille supérieure dont le complément (appelé contenu média complémentaire) est mémorisé dans une base **11** de données accessible via le réseau **9** étendu (et via la passerelle). Le contenu média incomplet est par ex. un fichier vidéo contenant les premières secondes ou les premières minutes du contenu média complet. A chaque contenu média sont associées des métadonnées, parmi lesquelles la durée du contenu.

Selon un mode préféré de réalisation, sur la mémoire **14** sont stockés plusieurs contenus média incomplets, dont les compléments sont mémorisés dans une base **11** de données.

Le processeur **13** est programmé pour détecter le branchement du connecteur **15** USB sur le port **6** compatible équipant l'appareil **2.** Cette détection peut se faire de manière classique via un signal reçu de l'unité de calcul de l'appareil **2,** qui détecte elle-même une chute de tension entre les broches D- et D+ et envoie au processeur **13** un courant d'initialisation en lui assignant une adresse.

Le processeur **13** peut être programmé pour exécuter de manière automatique un affichage du contenu de la mémoire **14** sur l'écran **4** de l'appareil **2.** En variante, c'est l'unité de calcul de l'appareil **2** qui est programmée pour exécuter un affichage automatique d'un contenu lu sur la mémoire **14** une fois détecté le branchement du périphérique **12.**

Selon encore une autre variante, l'accès au contenu inscrit sur la mémoire **14** n'est pas effectué automatiquement mais laissé à l'initiative d'un utilisateur au moyen des boutons **5** de commande de l'appareil **2** (ou par l'intermédiaire de zones de l'écran **4** si celui-ci est tactile).

Le processeur **13** est programmé pour détecter la lecture par l'appareil **2** d'un contenu média incomplet stocké sur la mémoire **14,** que cette lecture soit exécutée de manière automatique par le processeur **13** ou par l'unité de calcul de l'appareil **2,** ou encore à l'initiative de l'utilisateur.

Le processeur **13** est également programmé pour établir, de manière systématique ou sous certaines conditions, une connexion avec la passerelle **7** distante via l'interface **16** de communication sans fil.

La connexion du périphérique **12** à la passerelle **7** peut comprendre une opération d'identification du périphérique **12** dans l'hypothèse où la liaison avec la passerelle **7** par l'interface air est chiffrée. Dans ce cas, le processeur **13** peut être programmé pour générer sur l'écran **4** de l'appareil **2,** à l'occasion de la première connexion, une fenêtre contenant un masque de saisie d'une clé de chiffrement requise pour l'établissement de la connexion.

Si, dans l'hypothèse où la liaison avec la passerelle **7** est chiffrée, l'identification du périphérique **12** a été réalisée avant son branchement sur l'appareil **2,** celle-ci n'est plus requise (ou se fait automatiquement) à toute nouvelle tentative de connexion, de sorte qu'aucune intervention de l'utilisateur n'est nécessaire.

Selon un premier mode de réalisation, le processeur **13** est programmé pour établir systématiquement une connexion avec la passerelle **7** distante, par ex. dès le branchement du périphérique **12** sur l'appareil **2.** La détection du branchement du périphérique sur l'appareil **2** peut être réalisée au niveau de la passerelle **7,** par ex. par un processeur équipant celle-ci et programmé à cet effet.

Selon un deuxième mode de réalisation, le processeur **13** est programmé pour établir une connexion avec la passerelle **7** distante dès qu'est détectée la lecture d'un contenu média incomplet.

Selon un troisième mode de réalisation, le processeur **13** est programmé pour établir une connexion avec la passerelle **7** distante dès lors que la durée de lecture du contenu média incomplet a atteint ou dépassé un seuil temporel haut prédéterminé (c'est-à-dire que la lecture est loin du début), ou, à l'inverse, dès lors que le temps de lecture restant à lire de ce contenu média incomplet devient inférieur ou égal à un seuil temporel bas prédéterminé (c'est-à-dire que la lecture est proche de la fin).

Le processeur **13** est programmé pour télécharger, avant la fin de la lecture du contenu média incomplet, le contenu média complémentaire via la passerelle **7,** depuis la base **11** de données, et pour inscrire dans la mémoire **14** le contenu média complémentaire ainsi téléchargé.

Selon un mode de réalisation, la phase de téléchargement peut être précédée d'une requête de téléchargement au terme de laquelle la durée estimée du téléchargement est déterminée par le processeur **13,** celui-ci pouvant être programmé pour initier le téléchargement de manière que celui-ci soit achevé avant la fin de la lecture du média incomplet par l'appareil **2** à partir du fichier inscrit sur la mémoire **14.**

En variante, le téléchargement du contenu média complémentaire peut être initié avant même que soit exécutée la lecture du contenu média incomplet sur l'appareil **2.**

Quoi qu'il en soit, le téléchargement est de préférence initié suffisamment tôt, compte tenu du débit autorisé par la connexion entre le périphérique **2** et la passerelle **7,** pour que le contenu média complémentaire soit disponible à la lecture avant la fin de la lecture du contenu incomplet.

Selon un mode de réalisation préféré, le processeur **13** est programmé pour initier la lecture du contenu média complémentaire dans la continuité du contenu média incomplet.

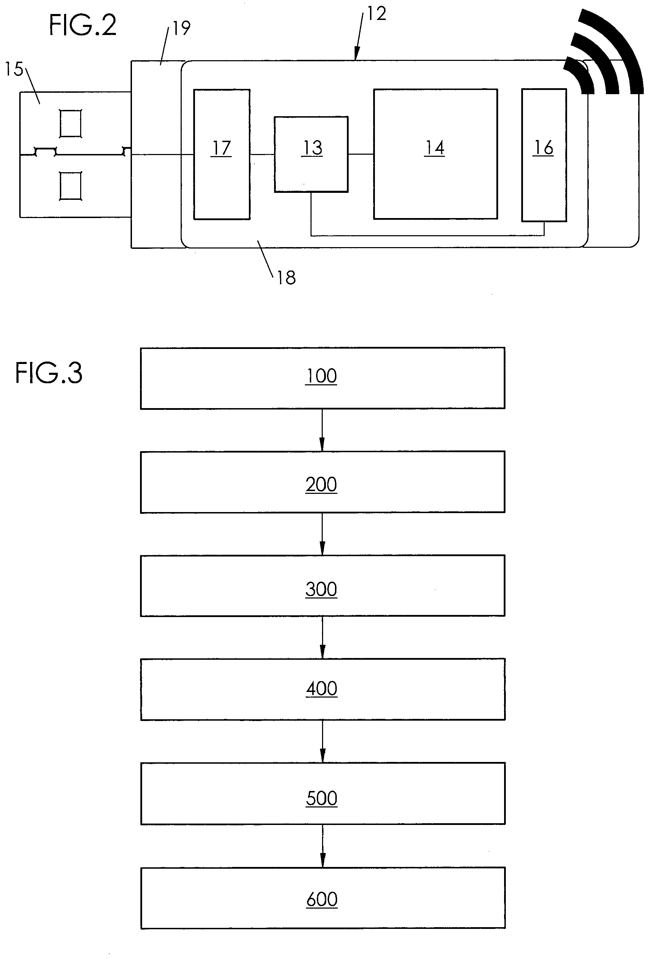

Pour diffuser un contenu média sur l'appareil **2** à partir du périphérique **12** de stockage amovible, il est procédé comme suit (on se reporte à la **FIG.3****).**

L'utilisateur commence par brancher le périphérique **12** sur l'appareil **2** par introduction du connecteur **15** USB sur le port **6** USB de l'appareil **2.** Ce branchement est détecté **(100)** par le processeur **13** du périphérique **2** et/ou ou par la passerelle **7.**

Comme expliqué précédemment, un (des) contenu(s) média incomplet(s) stocké(s) sur la mémoire peu(ven)t être affiché(s) sur l'écran **4** de l'appareil **2,** ou activés de manière automatique pour être lus **(200)** à l'aide d'un lecteur média implémenté dans l'unité de calcul de l'appareil **2** (ou dans le processeur **13** du périphérique **2**).

Cette lecture du (des) fichier(s) par l'appareil **2** est détectée par le processeur **13,** qui établit, via l'interface **16** de communication sans fil, une connexion **(300)** avec la passerelle **7.** En variante, la connexion est établie avant même le début de la lecture du contenu média incomplet sur l'appareil **2** (dans ce cas, les étapes **200** et **300** sont inversées).

Le contenu média complémentaire est téléchargé par le périphérique **2** à partir de la base **11** de données, via la passerelle **7.** Le fichier correspondant est stocké sur la mémoire **14** du périphérique **2** avant ou pendant la lecture du contenu média incomplet **(400).**

Le téléchargement du contenu complémentaire peut être continu ou séquentiel, c'est-à-dire que le contenu complémentaire peut être téléchargé et stocké en une fois ou en plusieurs fois, auquel cas il divisé en plusieurs contenus complémentaires qui sont téléchargés et enregistrés sur la mémoire **14** au fur et à mesure que se poursuit la lecture du contenu incomplet et qu'approche la fin de cette lecture.

Lorsqu'est détectée **(500)** la fin de la lecture du contenu média incomplet, la lecture du contenu média complémentaire est initiée **(600)** dans la continuité du contenu média incomplet. En variante, à l'approche de la fin de la lecture du contenu média incomplet, le processeur **13** commande la concaténation du contenu incomplet et de son complément et commande la lecture du contenu ainsi concaténé dans la continuité de celle du contenu incomplet.

De la sorte, si le contenu média est scindé en au moins deux parties (une première partie incomplète sur stockée dans la mémoire **14** et une ou plusieurs partie(s) complémentaire(s) stockées sur une base **11** de données accessible par le réseau **9** élargi via la passerelle **7**), l'utilisateur a l'illusion que ce contenu média est unitaire.

En d'autres termes, tout se passe comme si le contenu média (par exemple un morceau ou un album musical, ou un film) était stocké dans son intégralité sur le périphérique **12,** alors qu'un (ou plusieurs) fichier(s) de faible taille est (sont) stocké(s) dans la mémoire **14** du périphérique **12.** De la sorte, il est possible de limiter la capacité de stockage de la mémoire **14** - et la taille des fichiers qui y sont stockés - tout en permettant la diffusion de contenus de grande taille sur un appareil **2** dépourvu d'interface de communication sans fil.

Concrètement, il est possible de stocker sur la mémoire **14** les premiers instants (par ex. les premières minutes) de plusieurs films dont la suite est stockée sur une base **11** de données en ligne (accessible par le réseau **9** et via la passerelle **7**) tout en permettant à l'utilisateur de les lire sur l'appareil **2** dans leur intégralité.

Pour conserver la capacité de stockage de la mémoire **14,** il est possible de programmer le processeur **13** pour effacer les fichiers téléchargés après que ceux-ci ont été lus.

## Revendications

1. Périphérique **(12)** de stockage amovible comprenant :
- un processeur **(13),**
- une mémoire **(14)** à semi-conducteurs non volatile réinscriptible (flash) reliée au processeur **(13),**
- un connecteur **(15)** au standard Bus série universel (USB), relié au processeur **(13),**
- une interface **(16)** de communication sans fil reliée au processeur **(13),**
ce périphérique **(12)** étant **caractérisé en ce que** le processeur **(13)** est programmé pour :
- détecter la lecture, par un appareil **(2)** dépourvu d'interface de communication sans fil, d'un contenu média incomplet stocké sur la mémoire **(14),**
- établir, via l'interface **(16)** de communication sans fil, une connexion avec une passerelle **(7)** distante ;
- télécharger un contenu média complémentaire du contenu média incomplet via la passerelle **(7),**
- inscrire en mémoire **(14)** le contenu complémentaire ainsi téléchargé.

2. Périphérique **(12)** selon la revendication 1, **caractérisé en ce que** le processeur **(13)** est programmé pour commander :
- la lecture du contenu média incomplet,
- la lecture du contenu média complémentaire dans la continuité du contenu média incomplet.

3. Périphérique **(12)** selon la revendication 1 ou la revendication 2, **caractérisé en ce que** le processeur **(13)** est programmé pour :
- détecter, lors de la lecture du contenu média incomplet, l'approche de la fin de cette lecture,
- commander la concaténation du contenu média incomplet et du contenu média complémentaire,
- poursuivre la lecture sur l'appareil **(2)** du contenu média complet.

4. Procédé de diffusion de contenu média sur un appareil **(2)** dépourvu d'interface de communication sans fil, ce procédé comprenant les opérations consistant à :
- fournir un périphérique **(12)** de stockage selon l'une de revendications précédentes ;
- détecter le branchement du connecteur **(15)** USB du périphérique **(12)** sur un port **(6)** complémentaire équipant l'appareil **(2)** ;
- détecter la lecture par l'appareil **(2)** d'un contenu média incomplet stocké sur la mémoire **(14)** du périphérique **(12)** de stockage ;
- établir, via l'interface **(16)** de communication sans fil, une connexion entre le processeur **(13)** et une passerelle **(7)** distante ;
- télécharger un contenu média complémentaire du contenu média incomplet via la passerelle **(7)** ;
- inscrire en mémoire **(14)** le contenu complémentaire ainsi téléchargé.

5. Procédé de diffusion selon la revendication 4, **caractérisé en ce qu'**il comprend une opération de lecture du contenu média complémentaire sur l'appareil **(2)** dans la continuité du contenu média incomplet.

6. Procédé de diffusion selon la revendication 4 ou la revendication 5, **caractérisé en ce qu'**il comprend une opération de concaténation du contenu média incomplet et du contenu média complémentaire.

## Patentansprüche

1. Abnehmbares Speicherperipheriegerät (12), umfassend:
- einen Prozessor (13),
- einen nicht flüchtigen wiederbeschreibbaren (Flash-) Speicher (14) mit Halbleitern, der mit dem Prozessor (13) verbunden ist,
- einen Stecker (15) im universellen seriellen Busstandard (USB), der mit dem Prozessor (13) verbunden ist,
- eine drahtlose Kommunikationsschnittstelle (16), die mit dem Prozessor (13) verbunden ist,
wobei dieses Peripheriegerät (12) **dadurch gekennzeichnet, ist, dass** der Prozessor (13) programmiert ist, zum:
- Detektieren des Lesens, durch eine Einrichtung (2), die mit keiner drahtlosen Kommunikationsschnittstelle versehen ist, eines unvollständigen Medieninhalts, der in dem Speicher (14) abgelegt ist,
- Erstellen, über die drahtlose Kommunikationsschnittstelle (16) einer Verbindung mit einem entfernten Gateway (7);
- Herunterladen eines ergänzenden Medieninhalts des unvollständigen Medieninhalts über das Gateway (7),
- Einschreiben in den Speicher (14) des so heruntergeladenen ergänzenden Inhalts.

2. Peripheriegerät (12) nach Anspruch 1, **dadurch gekennzeichnet, dass** der Prozessor (13) programmiert ist, um Folgendes zu steuern:
- das Lesen des unvollständigen Medieninhalts,
- das Lesen des ergänzenden Medieninhalts in der Fortsetzung des unvollständigen Medieninhalts.

3. Peripheriegerät (12) nach Anspruch 1 oder Anspruch 2, **dadurch gekennzeichnet, dass** der Prozessor (13) programmiert ist, zum:
- Detektieren, beim Lesen des unvollständigen Medieninhalts, der Annäherung des Endes dieser Lesung,
- Steuern der Verknüpfung des unvollständigen Medieninhalts und des ergänzenden Medieninhalts,
- Fortsetzen der Lesung in der Einrichtung (2) des vollständigen Medieninhalts.

4. Verfahren zum Ausstrahlen eines Medieninhalts in einer Einrichtung (2), die mit keiner drahtlosen Kommunikationsschnittstelle versehen ist, wobei dieses Verfahren die Vorgänge umfasst, bestehend aus:
- Bereitstellen eines Speicherperipheriegeräts (12) nach einem der vorstehenden Ansprüche;
- Detektieren des Anschlusses des USB-Steckers (15) des Peripheriegeräts (12) an einem ergänzenden Anschluss (6), mit dem die Einrichtung (2) ausgestattet ist;
- Detektieren des Lesens durch die Einrichtung (2) eines unvollständigen Medieninhalts, der in dem Speicher (14) des Speicherperipheriegeräts (12) abgelegt ist;
- Erstellen, über die drahtlose Kommunikationsschnittstelle (16) einer Verbindung zwischen dem Prozessor (13) und einem entfernten Gateway (7) ;
- Herunterladen eines ergänzenden Medieninhalts des unvollständigen Medieninhalts über das Gateway (7);
- Einschreiben in den Speicher (14) des so heruntergeladenen ergänzenden Inhalts.

5. Verfahren zum Ausstrahlen nach Anspruch 4, **dadurch gekennzeichnet, dass** es einen Lesevorgang des ergänzenden Medieninhalts in der Einrichtung (2) in der Fortsetzung des unvollständigen Medieninhalts umfasst.

6. Verfahren zum Ausstrahlen nach Anspruch 4 oder Anspruch 5, **dadurch gekennzeichnet, dass** es einen Vorgang zum Verknüpfen des unvollständigen Medieninhalts und des ergänzenden Medieninhalts umfasst.

## Claims

1. Removable storage device (12) including :
- a processor (13),
- a rewritable (flash) non-volatile semiconductor memory (14) connected to the processor (13),
- a connector (15) to the Universal Serial Bus (USB) standard, connected to the processor (13),
- a wireless communication interface (16) connected to the processor (13),
this device being **characterized in that** the processor (13) is programmed to :
- detect the reading, by a device (2) without a wireless communication interface, of incomplete media content stored in the memory (14),
- establish a connection to a remote gateway (7) via the wireless communication interface (16);
- download additional media content via the gateway (7),
- record in the memory (14) the additional content thus downloaded.

2. The device (12) according to claim 1, **characterised in that** the processor (13) is programmed to control:
- the playback of incomplete media content,
- the reading of the complementary media content in the continuity of the incomplete media content.

3. Device (12) according to claim 1 or claim 2, **characterised in that** the processor (13) is programmed for:
- detect, when playing back incomplete media content, the approach of the end of such playback,
- order the concatenation of incomplete media content and additional media content,
- continue to play back the complete media content on the device (2).

4. A method of broadcasting media content on an apparatus (2) without a wireless communication interface, the method comprising the steps of:
- providing a storage device (12) according to one of the preceding claims;
- detecting the connection of the USB connector (15) of the peripheral (12) to a complementary port (6) fitted to the device (2);
- detecting the reading by the device (2) of incomplete media content stored in the memory (14) of the storage device (12);
- establish, via the wireless communication interface (16), a connection between the processor (13) and a remote gateway (7);
- download additional media content via the gateway (7);
- store the downloaded additional media content in the memory (14).

5. A method of broadcasting according to claim 4, **characterised in that** it comprises an operation of reading the complementary media content on the device (2) in the continuity of the incomplete media content.

6. A method of broadcasting according to claim 4 or claim 5, **characterised in that** it comprises an operation of concatenation of incomplete media content and complementary media content.
